# EUROPÄISCHE PATENTSCHRIFT

(11) **EP 2 532 288 B1**
(45) Veröffentlichungstag und Bekanntmachung des Hinweises auf die Patenterteilung: **13.08.2014**
(21) Anmeldenummer: 12170850.7
(22) Anmeldetag: 05.06.2012
(51) Int. Cl.: A47J 31/44, A47J 31/46

(54) **Kaffeemaschine mit füllstandsabhängiger Durchflussrate**
Coffee machine with fill level-dependent flow rate
Machine à café dotée d'un débit dépendant de l'état de remplissage

(30) Priorität: 07.06.2011 DE 102011077133
(43) Veröffentlichungstag der Anmeldung: 12.12.2012
(73) Patentinhaber: BSH Bosch und Siemens Hausgeräte GmbH, 81739 München (DE)
(72) Erfinder: De Castro Pardo, Jorge, 83365 Nußdorf (DE); Dong, Ruoheng, 83301 Traunreut (DE); Nagl, Mathias, 83313 Siegsdorf (DE); Stadler, Georg, 5101 Bergheim b. Salzburg (AT)

(56) Entgegenhaltungen:
- DE-A1-102004 016 989
- US-A1- 2003 003 208

## Beschreibung

Die Erfindung betrifft eine Kaffeemaschine mit einem Wassertank zur Bevorratung von Wasser, und mit einer Leitung, die mit Ihrem ersten Ende zur Entnahme von Wasser aus dem Wassertank flüssigkeitsleitend mit dem Wassertank verbunden ist, und deren zweites Ende in einen Filter der Kaffeemaschine mündet, um Wasser in den Filter zu fördern.

Bei der Zubereltung von Kaffee mit einer Filter-Kaffeemaschlne fließt Wasser aus dem Wassertank unter Einfluss von Schwerkraft durch eine bodenseitige Entnahmeöffnung im Wassertank in eine Heizung, wo es erwärmt wird. In der Heizung dehnt sich das erhitzte Wasser aus. Ein Rückschlagventil bewirkt eine Ausdehnung des Wassers ausschließlich in Richtung des Kaffeefilters und vermeidet einen Rückstrom in Richtung des Wassertanks.

Die Abmessungen der Leitungsquerschnitte und der Entnahmeöffnung am Boden des Wassertanks definieren eine Förderrate, mit der Wasser in die Heizung strömt. Sie ist regelmäßig auf eine Zubereitungsmenge der Kaffeemaschine von 6 bis 8 Tassen abgestimmt. Bei kleineren Zubereitungsmengen dagegen passiert das Wasser die Heizung zu schnell. Dadurch erhält das Kaffeepulver keine ausreichende Zeit für einen Wasserkontakt ("Kontaktzeit"), so dass sich nicht alle Aromastoffe des Kaffees vollständig entfalten können. Es ist daher aus der DE 10 2004 016 989 bekannt, mittels einer separat einschaltbaren Sonderfunktion die Heizleistung zu drosseln, so dass auch bei Zubereitung einer kleinen Zubereitungsmenge das Kaffeepulver eine ausreichende Kontaktzeit mit dem Wasser erhält. Dies erfordert jedoch ein manuelles Zuschalten der Sonderfunktion und einen erhöhten Schaltungsaufwand zur Steuerung der Heizung. Ferner ist aus der US 200310003208 A1 eine Kaffeemaschine bekannt die über Mittel zur Steuerung von einer Mehrzahl an Ventilen verfügt, um selektiv heißes Wasser von Helßwassertank in den Kaffeefilter zu fördern.

Es ist daher Aufgabe der Erfindung, die Bedienung einer Kaffeemaschine bei gleicher Funktionalität zu vereinfachen.

Diese Aufgabe wird erfindungsgemäß dadurch gelöst, dass die Größe der vom Wasser durchflossenen Durchflussfläche der Leitung zwischen dem Wassertank und der Heizung in Abhängigkeit vom Füllstand Im Wassertank unterschiedlich ist, und dass ein erste Ende einer Leitung als ein sich in Schwerkraftrichtung erstreckendes Rohr am Wassertank ausgebildet ist, dessen Mantelfläche im Betrieb der Kaffeemaschine zumindest zum Teil wasserberührt ist. Die maßgebliche Durchflussfläche bzw. ein maßgeblicher Durchflussquerschnitt der Leitung ist erfindungsgemäß also so gestaltet, dass sie bzw. er mlt steigendem Wasserstand im Wassertank ebenfalls zunimmt.

Bei geringeren Zubereitungsmengen sorgt sie damit für eine geringere Förderrate des Wassers als bei einem höheren Wasserstand. Die maßgebliche Durchflussfläche zwischen Wassertank und Heizung ist die engste Durchflussfläche, die folglich den Durchfluss des Wassers Richtung Heizung bestimmt. Die erfindungsgemäße Lösung wendet sich also davon ab, bei Zubereitung einer kleinen Kaffeemenge durch den Bediener die Heizleistung zu verändern. Sie verfolgt vielmehr das Prinzip, die Förderrate bzw. den Durchfluss des Wassers in Abhängigkeit vom Wasserstand im Wassertank selbsttätig zu regeln. Ihr gelingt dies durch unterschiedliche Größen der Durchflussfläche der Leitung zwischen Wassertank und Heizung für unterschiedliche Wasserstände. Sie macht sich also die Erkenntnis zunutze, dass der Durchfluss durch die Leitung von deren Durchflussquerschnitt abhängig ist. Eine Drosselung des Durchflusses lässt sich folglich auch durch eine Verringerung des Durchflussquerschnitts erreichen. Damit gelingt ihr eine immer gleich bleibende Zubereitungsqualität des Kaffees, die weder von der Zubereitungsmenge noch von der korrekten Bedienung der Kaffeemaschine durch den Bediener abhängig ist. Außerdem erübrigt sie eine aufwendige Steuerung der Heizung.

Die maßgebliche Durchflussfläche liegt prinzipiell zwischen Wassertank und Heizung. Nach einer vorteilhaften Ausgestaltung der Erfindung stellt die Durchflussfläche einen Wassereinlass am ersten Ende der Leitung dar, liegt damit also im Bereich des Wassertanks. Dies erlaubt einen besonders einfachen Aufbau, bei dem die Mittel, die die Größe der durchflossenen Durchflussfläche variieren, am Wassereinlass im Wassertank angeordnet sind. Dadurch können die den Wassertank und die Heizung verbindende Leitung und damit die Kaffeemaschine an sich unverändert bleiben. Außerdem kann die erfindungsgemäße Einrichtung durch Austausch des Wassertanks an bestehenden Kaffeemaschinen nachgerüstet werden.

Nach einer weiteren vorteilhaften Ausgestaltung der Erfindung kann die Durchflussfläche des Wassereinlasses eine Mehrzahl von Wassereinlassöffnungen aufweisen, die in Schwerkraftrichtung übereinander angeordnet sind. Bei maximalem Füllstand im Wassertank werden alle Wassereinlassöffnungen von Wasser durchflossen. Nimmt in der Folge der Füllstand ab, fällt von oben beginnend eine Wassereinlassöffnung nach der anderen trocken, bis schließlich eine letzte, unterste Wassereinlassöffnung vom Wasser durchströmt wird. Folglich wird bei der Zubereitung einer kleinen Kaffeemenge lediglich eine Teilmenge der Wassereinlassöffnungen durchflossen, die zusammen genommen eine geringere Durchflussfläche ergeben. Bei der Zubereitung einer größeren Menge dagegen werden mehrere oder alle Wassereinlassöffnungen durchflossen, deren Querschnittsflächen sich zu einer größeren Durchflussfläche addieren. So wird eine Veränderung der durchflossenen Durchflussfläche in Abhängigkeit vom Füllstand im Wassertank erreicht, ohne dass mechanisch bewegte Teile oder elektrische Steuerungen notwendig sind. Die übereinander angeordneten Wassereinlassöffnungen ergeben zusammen genommen eine Durchflussfläche, die weitgehend proportional zum Wasserstand variiert. Erfindungsgemäß lässt sich also ohne großen konstruktiven oder steuerungstechnischen Aufwand eine Drosselung des Wasserflusses erreichen, wenn nur geringere Mengen an Kaffee als die maximal mögliche zubereitet werden sollen.

Die Wassereinlassöffnungen können unterschiedlich ausgebildet sein, d. h. sie können unterschiedliche Abmessungen und Umrissformen aufweisen. Dadurch kann die Zu- oder Abnahme der Durchflussfläche in Abhängigkeit von der Höhe verändert werden. Nach einer weiteren vorteilhaften Ausgestaltung der Erfindung können alle Wassereinlassöffnungen gleich groß sein. Als praktikabel hat sich bei vier Wassereinlassöffnungen eine Querschnittsfläche zwischen 5 und 10 mm² und als noch günstiger von 7 bis 8 mm² herausgestellt. Dies erlaubt eine besonders einfache Dimensionierung und Anordnung der Wassereinlassöffnungen im Wassertank.

Die Wassereinlassöffnungen sind im Wassertank in Schwerkraftrichtung prinzipiell übereinander angeordnet, um entsprechend einem Füllstand im Wassertank vom Wasser durchflossen zu werden. Die Wassereinlassöffnungen können dabei versetzt angeordnet sein, so dass bei z. B. sinkendem Wasserstand zumindest zwei Wassereinlassöffnungen gleichzeitig vom Wasserspiegel erfasst werden. So kann eine sprunghafte Änderung der Förderrate bzw. des Durchflusses vermieden werden. Nach einer weiteren vorteilhaften Ausgestaltung der Erfindung können die Wassereinlassöffnungen in Schwerkraftrichtung voneinander beabstandet angeordnet sein, so dass sie nicht gleichzeitig vom Wasserspiegel erfasst werden. Es besteht dann in Schwerkraftrichtung zwischen den einzelnen Wassereinlassöffnungen ein Abstand. Dies führt dazu, dass die Förderrate sich sprunghaft ändert, sobald der Füllstand im Wassertank eine der Wassereinlassöffnungen erreicht und sie anschließend trocken fällt. Eine sprunghafte Änderung des Durchflusses ist aber hinnehmbar, weil der Kaffeebezug an der Kaffeemaschine ebenfalls nicht kontinuierlich erfolgt, sondern in Mengeneinheiten, die meist mehrere Tassenfüllungen umfassen.

Ein erster Abstand zwischen zwei benachbarten Wassereinlassöffnungen kann einem beliebigen Vielfachen einer Füllmengeneinheit der Kaffeemaschine entsprechen. Eine Füllmengeneinheit entspricht einer Tassenfüllung, die etwa zwischen 120 ml und 140 ml beträgt und regelmäßig bei 135 ml liegt. Nach einer weiteren vorteilhaften Ausgestaltung der Erfindung kann der erste Abstand zwischen zwei benachbarten Wassereinlassöffnungen im Wesentlichen einer Füllmenge von vier Füllmengeneinheiten entsprechen. Das heißt, dass zwei Wassereinlassöffnungen derart angeordnet sind, dass sie bei einer Füllmenge von mehr als vier Füllmengeneinheiten vom Wasser durchflossen werden. Wenn die Füllmenge jedoch kleiner als vier Füllmengeneinheiten ist, wird lediglich eine der beiden Wassereinlassöffnungen von Wasser benetzt. So werden die durchflossene Durchflussfläche und damit die Förderrate reduziert, was eine verlängerte Verweilzeit des Wassers in der Heizung und folglich eine längere Kontaktzeit des Wassers im Filter bewirkt.

Nach einer weiteren vorteilhaften Ausgestaltung der Erfindung kann zumindest ein weiterer Abstand zwischen zwei benachbarten Wassereinlassöffnungen, die über den zuvor genannten liegen, im Wesentlichen einer Füllmenge von zwei Füllmengeneinheiten entsprechen. Es ist also eine weitere Wassereinlassöffnung vorgesehen, die durchflossen wird, wenn im Wassertank eine Füllmenge eingefüllt ist, die insgesamt sechs Füllmengeneinheiten übersteigt. Bei einer Zubereitung einer großen Kaffeemenge, z. B. von mehr als sechs Tassen, wird die Verweilzeit des Wassers in der Heizung im Verhältnis zur vorher beschriebenen Anordnung verkürzt und damit die Förderrate gesteigert, so dass sich die Kontaktzeit ebenfalls verhältnismäßig verkürzt.

Die Anordnung von mehreren Wassereinlassöffnungen übereinander führt meist zu einem diskontinuierlichen Durchfluss. Nach einer dazu alternativen Ausgestaltung der Erfindung kann die Durchflussfläche des Wassereinlasses daher schlitzförmig ausgebildet sein und sich im Wesentlichen in der Schwerkraftrichtung erstrecken. Unter einer schlitzförmigen Ausbildung des Wassereinlasses ist zu verstehen, dass die Durchflussfläche des Wassereinlasses erheblich länger als breit ist. Bei fallendem Füllstand im Wassertank wird folglich eine abnehmende Fläche des Schlitzes von Wasser durchflossen, bei einem hohen Füllstand im Wassertank steht dagegen eine größere Durchflussfläche bereit. Ein Schlitz konstanter Breite führt zu einer proportionalen Änderung der Durchflussfläche mit dem Wasserstand. Durch konisches Aufweiten des Schlitzes kann eine Über- oder Unterproportionalität zwischen der Durchflussfläche und dem Wasserstand erreicht werden. So sind auch bei diesem Ausführungsbeispiel keine mechanischen Bauteile nötig, um eine mit dem Wasserstand veränderte Durchflussfläche zu erzeugen.

Der Wassereinlass umfasst also mehrere Einlassöffnungen, die sich in Schwerkraftrichtung erstrecken oder verteilen. Erfindungsgemäß ist das erste Ende der Leitung als ein sich in Schwerkraftrichtung erstreckendes Rohr im oder am Wassertank ausgebildet, dessen Mantelfläche im Betrieb der Kaffeemaschine zumindest zum Teil wasserberührt ist. Es kann in einer Seitenwand des Wassertanks der Kaffeemaschine angeordnet sein oder als freistehendes Rohr vom Boden des Wassertanks aufragen. Vorteilhafterweise ist dann eine, nämlich die oberste Wassereinlassöffnung an einer oberen Stirnfläche des Rohrs ausgebildet. Dadurch kann das Rohr kurz gehalten werden.

Prinzipiell bietet die erfindungsgemäße Kaffeemaschine also eine Größe der maßgeblichen Durchfiussfläche, die prinzipiell weitgehend proportional zum Wasserstand des Tanks ist. Nach einer zur bisherigen Darstellung alternativen Ausgestaltung der Erfindung kann die Kaffeemaschine eine Erfassungseinrichtung für den Wasserstand und Mittel zur Ausbildung unterschiedlicher Durchflussflächen der Leitung umfassen. Eine Erfassungseinrichtung für den Wasserstand kann einen Schwimmer im Tank aufweisen, der mit Reedkontakten an der Kaffeemaschine kommuniziert, oder eine Druckmesseinrichtung im Bereich einer Bodenfläche des Wassertanks oder stromab in der Leitung, die anhand des vorherrschenden Wasserdrucks auf den Wasserstand schließt. Abhängig von den dadurch ermittelten Werten für den Wasserstand kann das Wasser dann durch Leitungen mit unterschiedlichem Querschnitt geführt werden. Alternativ kann sich in der Leitung zwischen Wassertank und Heizung eine ansteuerbare Drossel befinden, die durch die Erfassungseinrichtung steuerbar ist.

Die Erfindung ist nachstehend anhand eines in der Zeichnung dargestellten Ausführungsbeispiels erläutert. Es zeigen:
- Figur 1:: eine Prinzipskizze einer Kaffeemaschine nach dem Stand der Technik,
- Figur 2:: einen senkrechten Schnitt durch einen Wassertank eines ersten Ausführungsbeispiels einer erfindungsgemäßen Kaffeemaschine,
- Figur 3:: eine Draufsicht des in Figur 2 geschnittenen Wassertanks,
- Figur 4:: eine Schnittdarstellung entlang der Schnittlinie IV-IV in Figur 2,
- Figur 5:: eine perspektivische Teilschnittansicht des Wassertanks,
- Figur 6:: das Detail VI aus Figur 5,
- Figur 7:: das Detail VII aus Figur 5,
- Figur 8:: eines Rohrs in einer ersten Ausführungsform,
- Figur 9:: das Detail IX der Figur 8,
- Figur 10:: das Detail X der Figur 8,
- Figur 11:: einen Schnitt entlang der Linie IX-IX der Figur 8, und
- Figur 12:: ein Rohr in einer zweiten Ausführungsform der Erfindung.

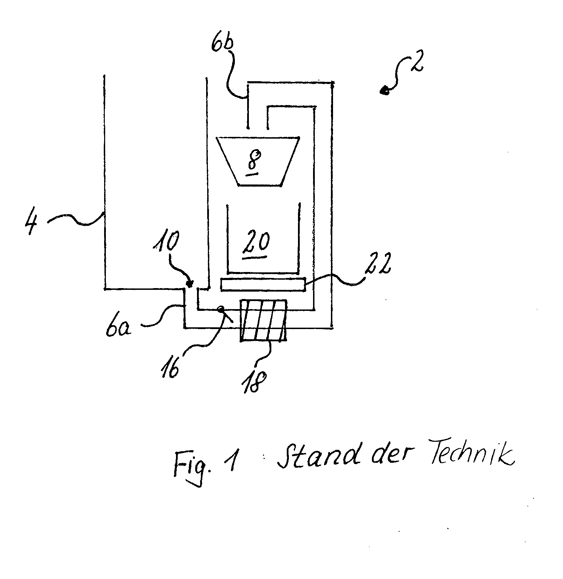

In Figur 1 ist eine Kaffeemaschine 2 nach dem Stand der Technik in einer Prinzipskizze dargestellt, die einen Wassertank 4 für einen Vorrat an Zubereitungswasser aufweist. Um im Betrieb Wasser aus dem Wassertank 4 zum Filter 8 der Kaffeemaschine 2 zu fördern, ist eine Leitung 6 mit ihrem ersten Ende 6a mit dem Wassertank 4 verbunden, das dort einen Wassereinlass 10 bildet. Mit ihrem zweiten Ende 6b mündet die Leitung 6 in einen Kaffeefilter 8, wo das Wasser auf Kaffeepulver trifft. Dort eluiert es das Kaffeepulver und gelangt in eine Kaffeekanne 20. Die Kanne 20 wird auf einer Warmhalteplatte 22 unter dem Filter 8 positioniert.

Zwischen dem Wassertank 4 und dem Filter 8 ist ein Heizelement 18 angeordnet. Zusammen mit einem stromauf des Heizelements 18 angeordneten Rückschlagventil 16 sorgt es im Betrieb auf an sich bekannte Weise für den Transport des Wassers vom Wassertank 4 in den Filter 8.

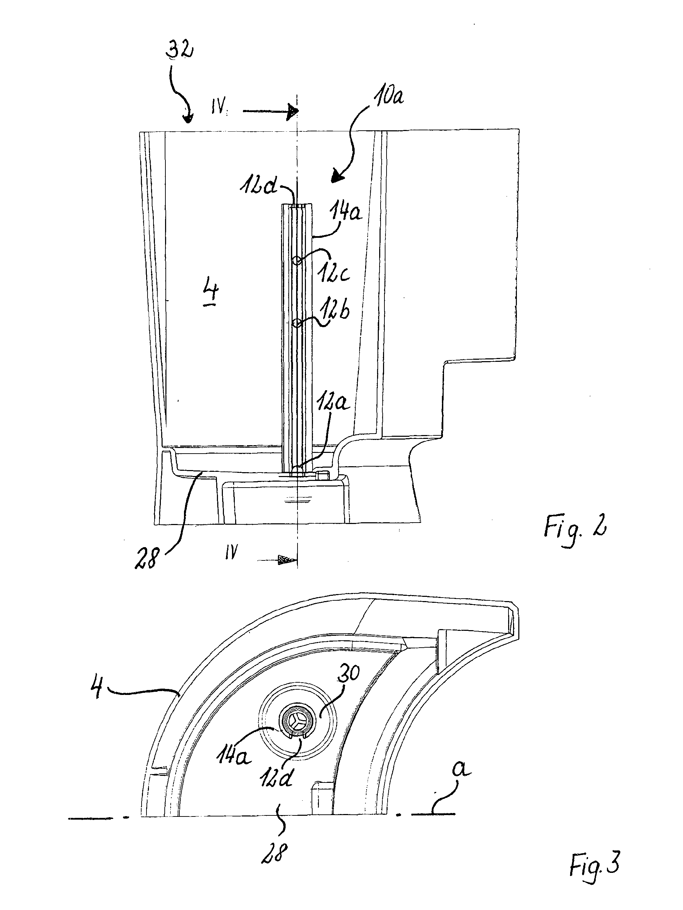

Figur 2 zeigt einen Schnitt durch den Wassertank 4 eines ersten Ausführungsbeispiels. Im Wassertank 4 ist ein senkrecht stehendes Rohr 14a angeordnet, das sich von einem Boden 28 des Wassertanks 4 in Richtung einer Einfüllöffnung 32 des Tanks 4 an seiner Oberseite erhebt. Es bildet als erstes Ende 6a einen Wassereinlass 10a, durch den Wasser aus dem Wassertank 4 in die Leitung 6 strömen kann.

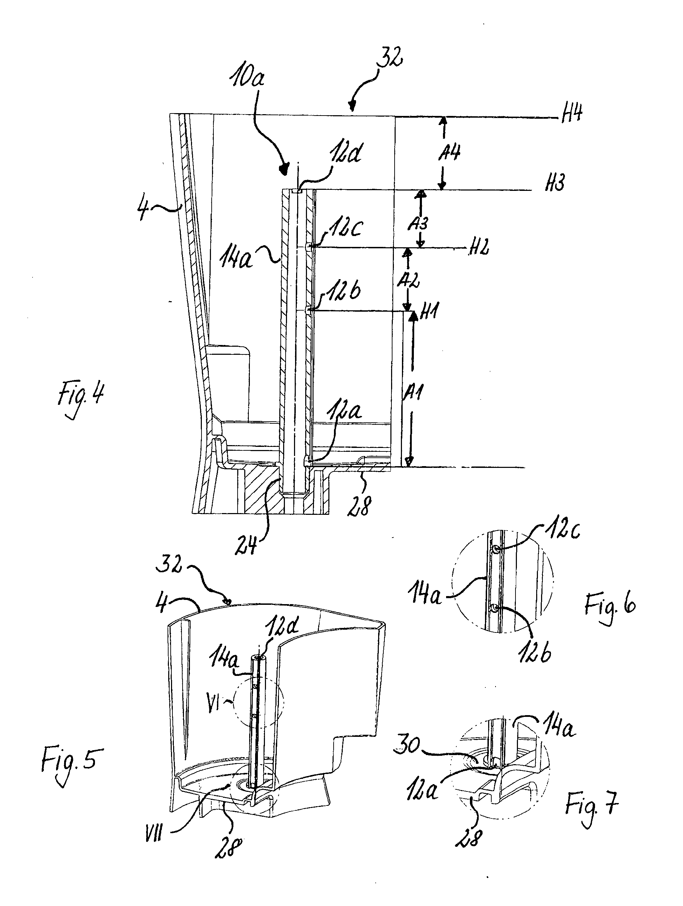

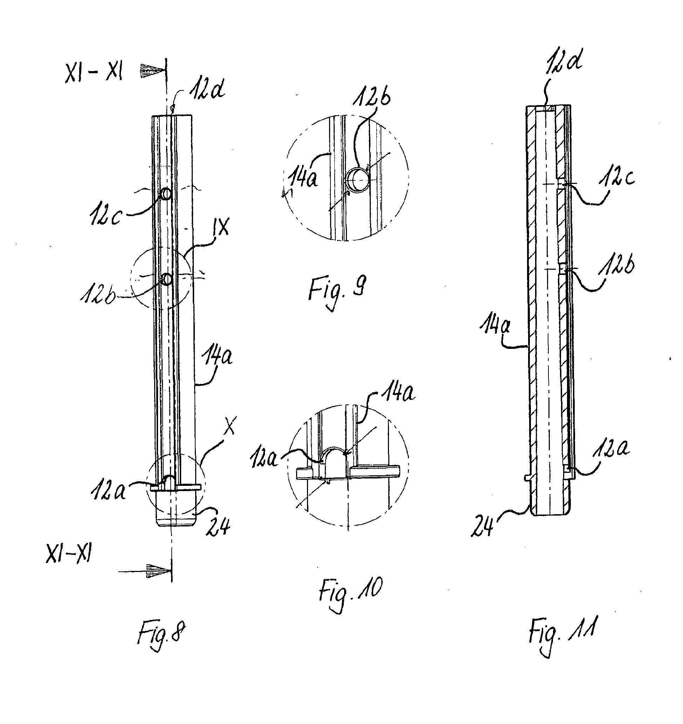

Der Wassereinlass 10a setzt sich aus vier Wassereinlassöffnungen 12a, 12b, 12c, 12d zusammen, die an dem Rohr 14a übereinander angeordnet sind. Alle vier Wassereinlassöffnungen 12a, 12b, 12c, 12d sind gleich groß und weisen eine Querschnittsfläche von 7 - 8 mm² auf. Die erste Wassereinlassöffnung 12a (vgl. auch Figur 10) liegt unmittelbar über dem Boden 28 des Wassertanks 4 bzw. an dessen tiefster Stelle in einem Sumpf 30, so dass der Wassertank 4 vollständig entleert werden kann. Die zweite Wassereinlassöffnung 12b und die dritte Wassereinlassöffnung 12c (vgl. auch Figuren 6 und 10) sind als kreisrunde Bohrungen ausgebildet, die sich radial durch die Mantelfläche des Rohrs 14a erstrecken, so dass Wasser durch das Rohr 14a zur Leitung 6 strömen kann. Die vierte Wassereinlassöffnung 12d ist am oberen stirnseitigen Ende des Rohres 14a angebracht und bildet somit quasi einen Überlauf, durch den das Wasser strömt, wenn der Füllstand im Wassertank 4 das obere Ende des Rohres 14 a übersteigt.

Figur 3 zeigt eine Draufsicht auf einen halbierten Wassertank 4. Demnach ist das Rohr 14a nicht in der Symmetrieachse a des Wassertanks 4 angeordnet, die in Figur 3 eine Schnittlinie bildet. Er ist außermittig auf dem Boden 28 in dem Sumpf 30 platziert, der das Rohr 14a konzentrisch umgibt.

Figur 4 zeigt eine Schnittansicht entlang der Schnittlinie IV - IV der Figur 2. Das Rohr 14a steckt im Betrieb mit einen Anschlussstutzen 24 (vgl. auch Figur 8) in einem nicht dargestellten Gehäuse der Kaffeemaschine, um eine flüssigkeitsleitende Verbindung mit der Leitung 6 zu bilden. Oberhalb der ersten Wassereinlassöffnung 12a, die unmittelbar über dem Anschlussstutzen 24 liegt, ist die zweite Wassereinlassöffnung 12b mit einem Abstand A1 von der ersten Wassereinlassöffnung 12a angeordnet, der einem Füllstand von vier Füllmengeneinheiten an der Füllstandsmarke H1 entspricht. Eine Füllmengeneinheit entspricht einem Tasseninhalt von 135 ml. Wenn sich im Wassertank 4 eine Wassermenge befindet, deren Füllstand unterhalb der Füllstandsmarke H1 liegt, strömt Wasser nur durch die erste Wassereinlassöffnung 12a.

Oberhalb der zweiten Wassereinlassöffnung 12b ist bei der Füllstandsmarke H2 die dritte Wassereinlassöffnung 12c angeordnet. Der Abstand A2 zwischen den Füllstandsmarken H1 und H2 ist in etwa halb so groß wie der Abstand A1 und entspricht folglich einer Füllmenge von zwei Tassen. Ein der Füllstandsmarke H2 entsprechender Füllstand entspricht damit einer Füllmenge von sechs Tassen oder 810 ml. Somit strömt Wasser nur dann durch die dritte Wassereinlassöffnung 12c, wenn der Füllstand des Wassertanks 4 die Füllstandsmarke H2 übersteigt.

Eine obere Stirnseite des Rohres 14a stellt die Füllstandsmarke H3 dar. Dort ist die vierte Wassereinlassöffnung 12d angeordnet. Ihr Abstand A3 zur Wassereinlassöffnung 12c entspricht dem Abstand A2 und damit ebenfalls einer Füllmenge von zwei Tassen. Die Füllstandsmarke H3 kennzeichnet damit einer Füllmenge von acht Tassen. Die vierte Wassereinlassöffnung 12d hat einen Abstand A4 von der Einfüllöffnung 32 des Wassertanks, der in etwa dem Abstand A3 entspricht. Der Rand der Einfüllöffnung 32 stellt damit eine letzte Füllstandsmarke H4 dar. Der Wassertank 4 hat somit ein Volumen von insgesamt ca. 10 Tassen, das die Wassereinlassöffnungen 12d, 12c, 12b in drei weitgehend gleichgroße Abschnitte mit jeweils etwa 270 ml und die Wassereinlassöffnung 12a in einen doppelt so großen Abschnitt von ca. 540 ml Fassungsvermögen unterteilt.

Bei vollständig gefülltem Wassertank 4 stellt sich ein Füllstand ein, der die vier Wassereinlassöffnungen 12a, 12b, 12c, 12d übersteigt. Entsprechend fließt bei Inbetriebnahme der Kaffeemaschine 2 Wasser durch alle vier Wassereinlassöffnungen 12a, 12b, 12c, 12d und damit in einer hohen Förderrate in die Leitung 6. Fällt der Füllstand unter die Marke H3, wird die oberste, vierte Wassereinlassöffnung 12d nicht mehr durchflossen. Unterhalb der Füllstandsmarke H3 stehen also nur noch die drei Wassereinlassöffnungen 12a, 12b, 12c und damit nur noch drei Viertel der maximalen Durchflussfläche aller vier Wassereinlassöffnungen 12 zur Verfügung. Proportional zu der geringeren Durchflussfläche reduziert sich auch der Durchfluss bzw. die Durchflussrate des Wassers. Unterhalb der Füllstandsmarke H3 besteht daher eine um den Faktor ¾ geringere Durchflussrate als bei einem Wasserstand über der Marke H3.

Entsprechende Verhältnisse ergeben sich an den Marken H2 und H1: Unterhalb der Füllstandsmarke H2 steht mit den Wassereinlassöffnungen 12a, 12b nur noch die Hälfte der maximalen Durchflussfläche zur Verfügung. Eine Wassermenge, die sechs Tassen Kaffee ergeben soll, wird daher zunächst nur noch mit der halben Durchflussrate verarbeitet, wie die Wassermenge der ersten vier Tassen eines vollständig gefüllten Wassertanks 4. Unterhalb einer Füllstandsmenge von vier Tassen steht sogar nur noch die Wassereinlassöffnung 12a zur Verfügung, die zu einer Durchflussrate führt, die einem Viertel der maximalen Durchflussrate entspricht.

Die Durchflussrate, die sich erfindungsgemäß mit abnehmendem Füllstand reduziert, verlängert die Zubereitungsdauer geringerer Kaffeemengen im Verhältnis zu größeren bzw. zur Zubereitungsdauer der maximalen Zubereitungsmenge. Die Zubereitungsdauer einer Kaffeemenge steht damit nicht mehr in direktem Verhältnis zur Menge des dafür erforderlichen Wassers. Vielmehr erfordert die Zubereitung geringerer Kaffeemengen eine verhältnismäßig längere Zeitspanne. Genau das ist erwünscht, weil das Kaffeepulver im Filter 8 (vgl. Figur 1) damit längere Zeit mit Zubereitungswasser in Kontakt steht. Die langsamere Durchflussrate des Wassers führt damit über die längere Kontaktzeit zwischen Wasser und Kaffeepulver zu einer längeren und besseren Eluation des Kaffeepulvers im Filter 8. Es gelingt damit, auch für kleinere Zubereitungsmengen eine Kontaktzeit zu erhalten, die derjenigen großer bzw. der maximalen Zubereitungsmenge entspricht, auf die die ursprüngliche Förderrate der Kaffeemaschine ausgelegt ist. Damit erhalten auch kleinere Zubereitungsmengen von Kaffee ein besseres Aroma, das demjenigen größerer Zubereitungsmengen entspricht.

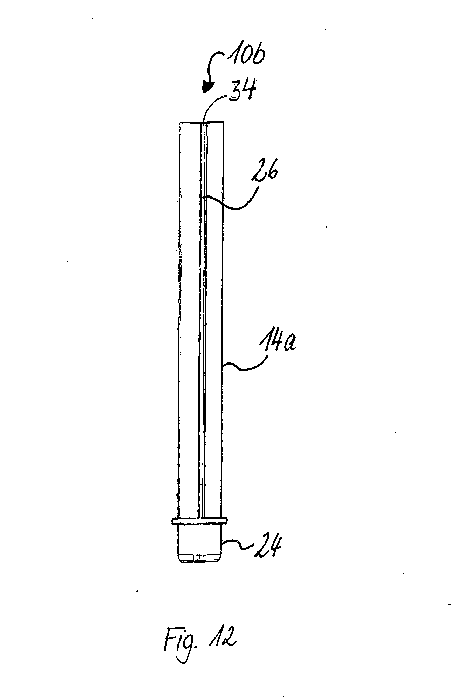

Figur 12 zeigt als eine alternative Ausgestaltungsform ein Rohr 14b, das einen Wassereinlass 10b bildet. Es ist weitgehend wie das Rohr 14a aufgebaut und kann an seiner Stelle in den Wassertank 4 einer Kaffeemaschine 2 eingesetzt werden. Anstatt kreisförmiger Wassereinlassöffnungen weist das Rohr 14b einen Schlitz 26 auf, der sich in der Erstreckungsrichtung des Rohrs 14b vom Anschlussstutzen 24 bis seiner oberen Stirnseite 34 erstreckt.

Bei vollständig gefülltem Wassertank 4 wird die ganze Fläche des Schlitzes 26 von Wasser durchflossen, so dass Wasser mit einer hohen Durchflussrate gefördert wird. Bei beispielsweise halb gefülltem Tank 4 wird ein geringerer Flächenanteil des Schlitzes 26 vom Wasser durchflossen. Da eine geringere Durchflussfläche eine geringere Durchflussrate bedingt, wird das Wasser mit einer dem Füllstand entsprechend geringeren Durchflussrate zum Heizelement 18 gefördert. Anders als im ersten Ausführungsbeispiel (Figuren 2 bis 11) verändert sich die Durchflussrate nicht in vier Schritten, sondern kontinuierlich mit der Wassermenge.

Da es sich bei den vorhergehenden, detailliert beschriebenen Wassertanks um Ausführungsbeispiele handelt, können sie in üblicher Weise vom Fachmann in einem weiten Umfang modifiziert werden, ohne den Bereich der Erfindung zu verlassen. Insbesondere können die konkreten Ausgestaltungen oder Anordnungen der Wassereinlassöffnungen in anderer Form als in der hier beschriebenen erfolgen. Ebenso können die Rohre 14 in einer anderen Form ausgestaltet werden, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 2: Kaffeemaschine
- 4: Wassertank
- 6: Leitung
- 6a: erstes Ende
- 6b: zweites Ende
- 8: Filter
- 10, 10a, 10b: Wassereinlass
- 12a, 12b, 12c, 12d: Wassereinlassöffnung
- 14a, 14b: Rohr
- 16: Rückschlagventil
- 18: Heizelement
- 20: Kaffeekanne
- 22: Warmhalteplatte
- 24: Anschlussstutzen
- 26: Schlitz
- 28: Boden
- 30: Sumpf
- 32: Einfüllöffnung
- 34: obere Stirnseite
- a: Symmetrieachse
- A1, A2, A3, A4: Abstand
- H1, H2, H3, H4: Füllstandsmarke

## Patentansprüche

1. Kaffeemaschine (2) mit einem Wassertank (4) zur Bevorratung von Wasser, und mit einer Leitung (6), die mit ihrem ersten Ende (6a) zur Entnahme von Wasser aus dem Wassertank (4) flüssigkeitsleitend mit dem Wassertank (4) verbunden ist, und deren zweites Ende (6b) in einen Filter (8) der Kaffeemaschine (2) mündet, um Wasser in den Filter (8) zu fördern, wobei die Größe der vom Wasser durchflossenen Durchflussfläche der Leitung (6) zwischen dem Wassertank und der Heizung in Abhängigkeit vom Füllstand im Wassertank (4) unterschiedlich ist, **dadurch gekennzeichnet, dass** das erste Ende (6a) als ein sich in Schwerkraftrichtung erstreckendes Rohr (14a, 14b) am Wassertank (4) ausgebildet ist, dessen Mantelfläche im Betrieb der Kaffeemaschine zumindest zum Teil wasserberührt ist.

2. Kaffeemaschine nach Anspruch 1, **dadurch gekennzeichnet, dass** die Durchflussfläche als Wassereinlass (10a, 10b) an dem ersten Ende (6a) ausgebildet ist.

3. Kaffeemaschine (2) nach Anspruch 2, **dadurch gekennzeichnet, dass** die Durchflussfläche des Wassereinlasses (10a) eine Mehrzahl von in Schwerkraftrichtung übereinander angeordneten Wassereinlassöffnungen (12a, 12b, 12c, 12d) aufweist.

4. Kaffeemaschine (2) nach Anspruch 3, **dadurch gekennzeichnet, dass** die Wassereinlassöffnungen (12a, 12b, 12c, 12d) gleich groß sind.

5. Kaffeemaschine (2) nach Anspruch 4, **dadurch gekennzeichnet, dass** ein erster Abstand (A1) zwischen zwei benachbarten Wassereinlassöffnungen (12a, 12b) im Wesentlichen einer Füllmenge von vier Fülimengeneinheften entspricht.

6. Kaffeemaschine (2) nach Anspruch 5, **dadurch gekennzeichnet, dass** zumindest ein zweiter Abstand (A2; A3) zwischen zwei benachbarten Wassereinlassöffnungen (12b, 12c. 12d) im Wesentlichen einer Füllmenge von zwei Füllmengeneinheiten entspricht.

7. Kaffeemaschine (2) nach Anspruch 2, **dadurch gekennzeichnet, dass** die Durchflussfläche des Wassereinlasses (10b) schlitzförmig ausgebildet ist und sich im Wesentllchen in Schwerkraftrichtung erstreckt.

8. Kaffeemaschine nach einem der obigen Ansprüche, **dadurch gekennzeichnet, dass** eine Wassereiniassöffnung (12d) an einer oberen Stirnfläche des Rohrs (14a) angeordnet ist.

9. Kaffeemaschine nach Anspruch 1, **gekennzeichnet durch** eine Erfassungseinrichtung für den Wasserstand im Wassertank und Mittel zur Ausbildung unterschledlicher Durchflussflächen der Leitung, die **durch** die Erfassungseinrichtung steuerbar sind.

## Claims

1. Coffee machine (2) comprising a water tank (4) for storing water, and a supply line (6) which is connected to said water tank (4) for conduction of fluid, the first end (6a) of said supply line (6) serving to remove water from said water tank (4), and the second end thereof (6b) opening into a filter (8) of the coffee machine (2) in order to convey water into the filter (8), wherein the size of the flow-through area of the supply line (6) through which water passes from the water tank to the heater varies depending on the level in the water tank (4), **characterised in that** the first end (6a) is embodied as a tube (14a, 14b) which extends on the water tank (4) in the direction of gravity, the lateral surface of said tube (14a, 14b) being at least partially in contact with water during operation of the coffee machine.

2. Coffee machine according to claim 1, **characterised in that** the flow-through area is embodied as a water inlet (10a, 10b) at the first end (6a).

3. Coffee machine (2) according to claim 2, **characterised in that** the flow-through area of the water inlet (10a) has a plurality of water inlet openings (12a, 12b, 12c, 12d) which are arranged above one another in the direction of gravity.

4. Coffee machine (2) according to claim 3, **characterised in that** the water inlet openings (12a, 12b, 12c, 12d) are the same size as one another.

5. Coffee machine (2) according to claim 4, **characterised in that** a first distance (A1) between two adjacent water inlet openings (12a, 12b) corresponds essentially to a filling capacity of four filling capacity units.

6. Coffee machine (2) according to claim 5, **characterised in that** at least one second distance (A2; A3) between two adjacent water inlet openings (12b, 12c, 12d) corresponds essentially to a filling capacity of two filling capacity units.

7. Coffee machine (2) according to claim 2, **characterised in that** the flow-through area of the water inlet (10b) is embodied as slot-like and extends substantially in the direction of gravity.

8. Coffee machine according to one of the preceding claims, **characterised in that** a water inlet opening (12d) is arranged on an upper end face of the tube (14a).

9. Coffee machine according to claim 1, **characterised by** a detection device for detecting the water level in the water tank and means for embodying different flow-through areas of the tube which can be controlled by said detection device.

## Revendications

1. Machine à café (2) avec un réservoir d'eau (4) pour le stockage d'eau, et avec un conduit (6), relié par sa première extrémité (6 a) pour prélever de l'eau du réservoir d'eau (4) d'une manière permettant la circulation de fluides au réservoir d'eau (4), et dont la deuxième extrémité (6 b) débouche dans un filtre (8) de la machine à café (2), afin d'amener de l'eau dans le filtre (8), dans lequel la grandeur de la surface d'écoulement du conduit (6) traversée par l'eau entre le réservoir d'eau et le chauffage varie en fonction du degré de remplissage du réservoir d'eau (4), **caractérisé en ce que** la première extrémité (6 a) est exécutée sous la forme d'un tuyau (14 a, 14 b) se déroulant dans le sens de la pesanteur sur le réservoir d'eau (4) et dont la surface d'enveloppe est au moins en partie en contact avec l'eau lorsque la machine à café fonctionne.

2. Machine à café selon la revendication 1, **caractérisée en ce que** la surface d'écoulement est exécutée sous la forme d'une arrivée d'eau (10 a, 10 b) sur la première extrémité (6 a).

3. Machine à café (2) selon la revendication 2, **caractérisée en ce que** la surface d'écoulement de l'arrivée d'eau (10 a) présente une pluralité d'orifices d'arrivée d'eau (12 a, 12 b, 12 c, 12 d) disposés l'un au-dessus de l'autre dans le sens de la pesanteur.

4. Machine à café (2) selon la revendication 3, **caractérisée en ce que** les orifices d'arrivée d'eau (12 a, 12 b, 12 c, 12 d) sont de même taille.

5. Machine à café (2) selon la revendication 4, **caractérisée en ce qu'**un premier écartement (A 1) entre deux orifices d'arrivée d'eau voisins (12 a, 12 b) correspond essentiellement à une capacité de remplissage de quatre unités de remplissage.

6. Machine à café (2) selon la revendication 5, **caractérisée en ce qu'**au moins un deuxième écartement (A 2 ; A 3) entre deux orifices d'arrivée d'eau voisins (12 b, 12 c, 12 d) correspond essentiellement à une capacité de remplissage de deux unités de remplissage.

7. Machine à café (2) selon la revendication 2, **caractérisée en ce que** la surface d'écoulement de l'arrivée d'eau (10 b) est exécutée sous la forme d'une fente et s'étend essentiellement dans le sens de la pesanteur.

8. Machine à café selon l'une des revendications précédentes, **caractérisée en ce qu'**un orifice d'arrivée d'eau (12 d) est disposé sur une surface frontale supérieure du tuyau (14 a).

9. Machine à café selon la revendication 1, **caractérisée par** un dispositif de saisie pour le niveau d'eau dans le réservoir d'eau et d'un moyen permettant de constituer des surfaces d'écoulement du conduit différentes, actionnables par le dispositif de saisie.
